# EUROPÄISCHE PATENTSCHRIFT

(11) **EP 3 976 397 B1**
(45) Veröffentlichungstag und Bekanntmachung des Hinweises auf die Patenterteilung: **14.06.2023**
(21) Anmeldenummer: 20730198.7
(22) Anmeldetag: 15.05.2020
(51) Int. Cl.: B60C 23/04

(54) **REIFENDRUCKÜBERWACHUNGSEINHEIT UND VERFAHREN ZUM VERWALTEN VON REIFENDATEN IN EINER REIFENDRUCKÜBERWACHUNGSEINHEIT**
TYRE PRESSURE MONITORING UNIT AND METHOD FOR MANAGING TYRE DATA IN A TYRE PRESSURE MONITORING UNIT
UNITÉ DE SURVEILLANCE DE PRESSION DE PNEUS ET PROCÉDÉ DE GESTION DE DONNÉES DE PNEUS DANS UNE UNITÉ DE SURVEILLANCE DE PRESSION DE PNEUS

(30) Priorität: 29.05.2019 DE 102019114444
(43) Veröffentlichungstag der Anmeldung: 06.04.2022
(73) Patentinhaber: Huf Baolong Electronics Bretten GmbH, 75015 Bretten (DE)
(72) Erfinder: DEDERER, Carsten, 74889 Sinsheim (DE); WALTER, Christian, 75428 Illingen (DE)
(74) Vertreter: Twelmeier Mommer & Partner
(86) Internationale Anmeldenummer: PCT/EP2020/063669
(87) Internationale Veröffentlichungsnummer: WO 2020/239479

(56) Entgegenhaltungen:
- EP-A1- 2 217 457
- DE-A1-102016 105 427

## Beschreibung

Die Erfindung betrifft eine Reifendrucküberwachungseinheit, die einen Speicher zum Speichern von Reifendaten, wie beispielsweise Reifentyp und Reifendimensionen, aufweist. Eine Reifendrucküberwachungseinheit mit den im Oberbegriff des Anspruchs 1 angegebenen Merkmalen ist aus der EP 2 217 457 B1 bekannt.

Reifendaten werden drahtlos in den Speicher von modernen Reifendrucküberwachungseinheiten geschrieben, beispielswiese auf die in der DE 10 2016 105 427 A1 beschriebene Weise, und können dann von der Reifendrucküberwachungseinheit einem sicherheitsrelevanten Fahrzeugsystem, z.B. einer ABS-Regelung, zur Verfügung gestellt werden. Insbesondere bei Reifendrucküberwachungseinheiten, die an einem Reifenventil oder einer Felge montiert werden, kann es nach einem Reifenwechsel vorkommen, dass in dem Speicher der Reifendrucküberwachungseinheit noch Reifendaten gespeichert sind, die nicht zu dem Reifen passen, der aktuell mit der Reifendrucküberwachungseinheit verwendet wird. In einem solchen Fall muss gewährleistet sein, dass sicherheitsrelevante Fahrzeugsysteme nicht mit veralteten oder falschen Reifendaten arbeiten.

Zur Lösung dieses Problem ist es aus der EP 2 217 457 B1 bekannt, in dem Speicher der Reifendrucküberwachungseinheit ein Flag vorzusehen, das jedes Mal gesetzt wird, wenn neuen Reifendaten in den Speicher der Reifendrucküberwachungseinheit geschrieben werden, und gelöscht wird, sobald der von der Reifendrucküberwachungseinheit gemessene Druck unter einen vorgegebenen Schwellenwert fällt. Da ein Reifenwechsel notwendigerweise mit einem Druckabfall verbunden ist, kann so sichergestellt werden, dass bei jedem Reifenwechsel das Flag gelöscht wird und eventuell noch in der Reifendrucküberwachungseinheit gespeicherte Reifendaten dann durch das gelöschte Flag als unzuverlässig markiert sind. Wenn nach einem Reifenwechsel vergessen wird, neue Reifendaten in die Reifendrucküberwachungseinrichtung zu schreiben, ist somit ausgeschlossen, dass die alten, nun möglicherweise unzutreffenden Reifendaten von einem Fahrzeugsystem verwendet werden.

Aufgabe der vorliegenden Erfindung ist es, einen alternativen Weg aufzuzeigen, wie zuverlässig verhindert werden kann, dass Fahrzeugsicherheitssysteme von einer Reifendrucküberwachung unzutreffende Reifendaten erhalten.

Diese Aufgabe wird durch eine Reifendrucküberwachungseinrichtung mit den im Anspruch 1 angegebenen Merkmalen sowie durch ein Verfahren gemäß Anspruch 5 gelöst. Vorteilhafte Weiterbildungen der Erfindung sind Gegenstand von Unteransprüchen.

In dem Speicher einer erfindungsgemäßen Reifendrucküberwachungseinrichtung wird jedes Mal, wenn Reifendaten in den Speicher der Reifendrucküberwachungseinrichtung geschrieben werden, einer Variablen ein Wert zugewiesen, der die Reifendaten als gültig markiert. Diese Variable kann beispielsweise ein Flag sein. Eine notwendige Bedingung dafür, dass der Variablen ein Wert zugewiesen wird, der die gespeicherten Reifendaten als ungültig markiert, besteht erfindungsgemäß darin, dass ein Druckanstieg detektiert wird, der einen vorgegebenen Schwellenwert übersteigt.

Mit anderen Worten gesagt, kann bei einer erfindungsgemäßen Reifendrucküberwachungseinrichtung der Variablen nur dann ein Wert zugewiesen werden, der die gespeicherten Reifendaten als ungültig markiert, wenn ein Druckanstieg detektiert wird, der einen vorgegebenen Schwellenwert übersteigt. Das Auftreten eines Druckanstiegs, der den vorgegebenen Schwellenwert übersteigt, bedeutet aber nicht zwangsläufig, dass der Variablen ein Wert zugewiesen wird, der die gespeicherten Reifendaten als ungültig markiert. Das Auftreten eines Druckanstiegs, der den vorgegebenen Schwellenwert übersteigt, ist also keine hinreichende Bedingung dafür, dass der Variablen ein Wert zugwiesen wird, der die gespeicherten Reifendaten als ungültig markiert.

Reifendaten können bei einem Reifenwechsel vor oder nach dem Aufpumpen des neuen Reifens in die Reifendrucküberwachungseinheit geschrieben werden. In beiden Fälle kann ein darauf folgender Reifenwechsel durch Überwachung des Reifendrucks erkannt werden.

Wenn Reifendaten vor dem Aufpumpen des Reifens in die Reifendrucküberwachungseinrichtung geschrieben wurden, wird das erste Aufpumpen des Reifens daran erkannt, dass in dem Reifen ein Druckanstieg detektiert wird, der einen vorgegebenen Schwellenwert übersteigt. Wenn dann ein zweites Mal ein Druckanstieg detektiert wird, der den vorgegebenen Schwellenwert übersteigt, besteht die Möglichkeit, dass der Reifen gewechselt wurde. Die in der Reifendrucküberwachungseinheit gespeicherten Reifendaten sind dann unzuverlässig und der Variablen wird ein Wert zu gewiesen, der die Reifendaten als ungültig kennzeichnet, beispielsweise indem die Variable ein Flag ist, das dann gelöscht wird.

Wenn die Reifendaten nach dem Aufpumpen des Reifens in die Reifendrucküberwachungseinrichtung geschrieben wurden, kann bereits der erste detektierte Druckanstieg die Folge eines Reifenwechsels ein. Allerdings muss in diesem Fall dem Druckanstieg ein entsprechender Druckabfall vorausgegangen sein, da die Reifendaten ja erst nach dem Aufpumpen des Reifens in die Reifendrucküberwachungseinheit geschrieben wurden. Der Variablen wird also auch dann ein Wert zu gewiesen, der die Reifendaten als ungültig kennzeichnet, wenn nach dem Schreiben von Reifendaten ein Druckabfall detektiert wird, der einen zweiten Schwellenwert übersteigt, und danach ein Druckanstieg, der den ersten Schwellenwert übersteigt.

Die Schwellenwerte für einen kritischen Druckanstieg und einen kritischen Druckverlust sind in Abhängigkeit von dem vorgesehen Fülldruck eines Reifens zu wählen. Wichtig dabei ist, dass durch Überschreiten des ersten Schwellenwerts auf ein Aufpumpen eines platten Reifens, und durch Überschreiten des zweiten Schwellenwerts auf einen völligen Druckverlust, wie der bei einem Reifenwechsel zwangsläufig auftritt, geschlossen werden kann.

In einer erfindungsgemäßen Reifendrucküberwachungseinheit kann beispielsweise ein erstes Flag vorgesehen sein, das gesetzt wird, sobald Reifendaten in den Speicher der Reifendrucküberwachungseinheit geschrieben werden und gelöscht wird, wenn die Reifendaten als ungültig erkannt werden. Ein zweites Flag kann gesetzt werden, wenn ein Druckanstieg erkannt wird, der den ersten Schwellenwert übersteigt, oder ein Druckabfall erkannt wird, der den zweiten Schwellenwert übersteigt. Das erste Flag wird dann gelöscht, wenn ein Druckanstieg erkannt wird, der den ersten Schwellenwert übersteigt, und das zweite Flag bereits gesetzt ist.

Ein erfindungsgemäßes Verfahren zum Verwalten von Reifendaten in einem Datenspeicher einer Reifendrucküberwachungseinheit kann beispielsweise folgendermaßen ausgestaltet sein:
Wenn eine Reifendrucküberwachungseinheit über ihren Empfänger drahtlos Reifendaten erhält, beispielsweise wie in der DE 10 2016 105 427 A1 beschrieben, werden diese Reifendaten in einem elektronischen Speicher der Reifendrucküberwachungseinheit gespeichert und einer Variablen ein Wert, zu gewiesen, der angibt, dass diese Reifendaten neu und gültig sind. Diese Variable kann beispielsweise ein Flag sein.

Mit dem Drucksensor der Reifendrucküberwachungseinheit wird dann der Reifendruck überwacht. Ein Grundgedanke der vorliegenden Erfindung besteht nämlich darin, dass ein Reifenwechsel stets mit einer deutlichen Druckänderung verbunden ist. Das Abnehmen eines alten Reifens ist stets mit einem Druckabfall verbunden und nach dem Aufziehen eines neuen Reifens muss dieser aufgepumpt werden, so dass ein deutlicher Druckanstieg zu beobachten ist.

Die Steuereinheit der Reifendrucküberwachungseinheit überprüft deshalb, ob ein Druckanstieg auftritt, der einen vorgegebenen Schwellenwert übersteigt. Beispielsweise kann dabei überprüft werden, ob der Reifendruck um 200 kPa in weniger als 5 Minuten ansteigt.

Das Übersteigen des vorgegebenen Schwellenwerts wird von der Steuereinheit in dem elektronischen Speicher der Reifendrucküberwachungseinheit vermerkt, beispielsweise indem ein entsprechendes Flag gesetzt wird.

Eine Ungültigkeit der Reifendaten kann dann auf unterschiedliche Weise erkannt werden. Eine Möglichkeit besteht darin, dass ein zweites Mal ein solcher Druckanstieg beobachtet wird, der den ersten Schwellenwert übersteigt. In diesem Fall wird also ein zweites Mal beobachtet, dass der Reifen ein zweites Mal vollständig aufgepumpt wird. Dies bedeutet, dass ein Reifenwechsel stattgefunden haben kann und die vorliegenden Reifendaten also nun als unzuverlässig bzw. ungültig einzustufen sind. Der Variablen wird dann ein entsprechender Wert zugewiesen, der die Reifendaten als ungültig markiert.

Alternativ oder zusätzlich kann auch ein Druckabfall ausgewertet werden. Beispielsweise kann überwacht werden, ob ein Druckabfall auftritt, der einen zweiten Schwellenwert übersteigt. Dieser zweite Schwellenwert kann beispielsweise so gewählt werden, dass ein vollständiger Druckverlust erkannt wird. Das Auftreten eines solchen Druckabfalls kann im Speicher der Reifendrucküberwachungseinheit vermerkt werden, beispielsweise durch Setzen eines Flags.

Reifendaten können nach einem Reifenwechsel grundsätzlich vor oder nach dem Aufpumpen des Reifens in die Reifendrucküberwachungseinrichtung geschrieben werden. Wenn Reifendaten nach einem Reifenwechsel vor dem ersten Aufpumpen in die Reifendrucküberwachungseinrichtung geschrieben werden, ist ein zweites Aufpumpen, d.h. ein zweiter Druckanstieg über den vorgegebenen Schwellenwert hinaus, ein Hinweis auf einen möglichen Reifenwechsel, so dass vorhandene Reifendaten als ungültig zu kennzeichnen oder zu löschen sind.

Wenn Reifendaten bei einem Reifenwechsel erst nach dem ersten Aufpumpen in die Reifendrucküberwachungseinheit geschrieben werden, kann bereits der erste kritische Druckanstieg auf dem Aufpumpen eines neuen Reifens beruhen. In diesem Fall muss dem beobachteten Druckanstieg aber ein kritischer Druckabfall vorausgegangen sein, da bei einem Reifenwechsel die Luft aus dem alten Reifen abgelassen wird. Wenn nach dem Schreiben von Reifendaten ein Druckabfall auftritt, der einen zweiten Schwellenwert übersteigt, und nach diesem Druckabfall dann ein Druckanstieg, der einen (ersten) Schwellenwert übersteigt, kann also ebenfalls ein Reifenwechsel stattgefunden haben, so dass die Reifendaten im Speicher der Reifendrucküberwachungseinrichtung als ungültig zu kennzeichnen oder zu löschen sind.

Wurden Reifendaten also in die Reifendrucküberwachungseinheit eines aufgepumpten Reifens geschrieben, werden diese Reifendaten als ungültig erkannt bzw. gelöscht, wenn ein kritischer Druckabfall und danach ein kritischer Druckanstieg detektiert wird.

Wurden Reifendaten dagegen in die Reifendrucküberwachungseinheit eines platten Reifens geschrieben, werden diese Reifendaten als ungültig erkannt bzw. gelöscht, wenn ein kritischer Druckanstieg und danach ein weiterer kritischer Druckanstieg detektiert wird.

Ein kritischer Druckanstieg kann an dem Überschreiten eines ersten Schwellenwerts erkannt werden, ein kritischer Druckabfall an einem zweiten Grenzwert.

## Patentansprüche

1. Reifendrucküberwachungseinheit zur Montage an einem Fahrzeugrad, mit
einem Sensor zum Messen des Reifendrucks,
einem Sender und einem Empfänger zur drahtlosen Datenübertragung,
einem Speicher zum Speichern von Reifendaten, und
einer Steuerung, die an den Sensor, den Sender, den Empfänger und den Speicher angeschlossen ist,
wobei die Steuerung bei Erhalt von über den Empfänger empfangenen Reifendaten diese Reifendaten in den Speicher schreibt und einer Variablen, einen Wert zuweist, der diese Reifendaten als gültig markiert,
**dadurch gekennzeichnet, dass**
eine notwendige Bedingung dafür, dass der Variablen ein Wert zugewiesen wird, der die Reifendaten als ungültig markiert, darin besteht, dass die Steuereinheit einen Druckanstieg detektiert, der einen vorgegebenen Schwellenwert übersteigt.

2. Reifendrucküberwachungseinheit nach Anspruch 1, **dadurch gekennzeichnet, dass** die Steuerung der Variablen einen Wert zuweist, der die Reifendaten als ungültig markiert, wenn dem Druckanstieg, der den vorgegebenen Schwellenwert übersteigt, ein Druckabfall vorausging, der nach dem Schreiben der Reifendaten aufgetreten ist und einen zweiten vorgegebenen Schwellenwert übersteigt.

3. Reifendrucküberwachungseinheit nach einem der vorstehenden Ansprüche, **dadurch gekennzeichnet, dass** die Steuerung der Variablen einen Wert zuweist, der die Reifendaten als ungültig markiert, wenn nach dem Schreiben der Reifendaten und nach dem Druckanstieg, der den vorgegebenen Schwellenwert übersteigt, ein weiterer Druckanstieg detektiert wird, der den vorgegebenen Schwellenwert übersteigt.

4. Reifendrucküberwachungseinheit nach einem der vorstehenden Ansprüche, **dadurch gekennzeichnet, dass** der Speicher ein elektronischer Speicher ist.

5. Verfahren zum Verwalten von Reifendaten in einem Datenspeicher einer Reifendrucküberwachungseinheit, wobei
beim Schreiben von Reifendaten in den Datenspeicher der Reifendrucküberwachungseinheit einer Variablen ein Wert zugewiesen wird, der angibt, dass diese Reifendaten gültig sind,
**dadurch gekennzeichnet, dass**
die Variable unverändert bleibt, solange kein Druckanstieg festgestellt wird, der einen vorgegebenen Schwellenwert übersteigt.

6. Verfahren nach Anspruch 5, **dadurch gekennzeichnet, dass** das Auftreten eines Druckanstiegs, der den vorgegebenen Schwellenwert übersteigt, im Speicher der Reifendrucküberwachungseinheit vermerkt wird, und der Variablen ein Wert zugewiesen wird, der Reifendaten als ungültig markiert werden, wenn ein zweites Mal seit dem Schreiben der Reifendaten ein Druckanstieg detektiert wird, der den vorgegebenen Schwellenwert übersteigt.

7. Verfahren nach Anspruch 5 oder 6, **dadurch gekennzeichnet, dass** nach dem Schreiben der Reifendaten das Auftreten eines Druckabfalls, der einen vorgegebenen Schwellenwert übersteigt, im Speicher der Reifendrucküberwachungseinheit vermerkt wird, und der Variablen ein Wert zugewiesen wird, der Reifendaten als ungültig markiert werden, wenn nach einem solchen Druckabfall ein Druckanstieg detektiert wird, der den vorgegebenen Schwellenwert übersteigt.

## Claims

1. A tire pressure monitoring unit for mounting on a vehicle wheel, comprising
a sensor for measuring tire pressure,
a transmitter and a receiver for wireless data transmission,
a memory for storing tire data, and
a controller connected to the sensor, the transmitter, the receiver and the memory,
the controller writing this tire data into the memory on receipt of tire data received via the receiver and assigning a value to a variable, the value marking this tire data as valid,
**characterized in that**
a necessary condition for the variable being assigned a value which marks the tire data as invalid is that the controller detects a pressure increase which exceeds a predetermined threshold value.

2. The tire pressure monitoring unit according to claim 1, **characterized in that** the controller assigns a value to the variable, the value marking the tire data as invalid, when the pressure increase that exceeds the predetermined threshold value was preceded by a pressure drop that occurred after the tire data was written and exceeds a second predetermined threshold value.

3. The tire pressure monitoring unit according to any one of the preceding claims, **characterized in that** the controller assigns a value to the variable, the value marking the tire data as invalid, when, after writing the tire data and after the pressure increase which exceeds the predetermined threshold value, a further pressure increase which exceeds the predetermined threshold is detected.

4. The tire pressure monitoring unit according to any one of the preceding claims, **characterized in that** the memory is an electronic memory.

5. A method for managing tire data in a data memory of a tire pressure monitoring unit,
when tire data are written into the data memory of the tire pressure monitoring unit, a variable being assigned a value that indicates that this tire data is valid,
**characterized in that**
the variable remains unchanged as long as no pressure increase which exceeds a predetermined threshold value is detected.

6. The method according to claim 5, **characterized in that** the occurrence of a pressure increase which exceeds the predetermined threshold value is noted in the memory of the tire pressure monitoring unit, and a value by which tire data are marked as invalid is assigned to the variable when a pressure increase that exceeds the predetermined threshold value is detected a second time since the tire data was written.

7. The method according to claim 5 or 6, **characterized in that** after the tire data have been written, the occurrence of a pressure drop which exceeds a predetermined threshold value is noted in the memory of the tire pressure monitoring unit, and a value by which tire data are marked as invalid is assigned to the variable when, after such a pressure drop, a pressure increase which exceeds the predetermined threshold value is detected.

## Revendications

1. Unité de surveillance de pression de pneus pouvant être montée sur une roue de véhicule, avec
un capteur pour mesurer la pression de pneus,
un émetteur et un récepteur pour la transmission de données sans fil,
une mémoire pour mémoriser des données de pneus, et
une commande, qui est raccordée au capteur, à l'émetteur, au récepteur et à la mémoire,
sachant que la commande, à réception des données de pneus reçues par le biais du récepteur, inscrit dans la mémoire ces données de pneus et attribue une valeur à une variable, qui marque les données de pneus comme valables,
**caractérisée en ce qu'**
une condition nécessaire au fait qu'une valeur est attribuée à la variable, qui marque les données de pneus comme non valables, réside dans le fait que l'unité de commande détecte une hausse de pression, qui dépasse une valeur de seuil prédéfinie.

2. Unité de surveillance de pression de pneus selon la revendication 1, **caractérisé en ce que** la commande attribue à la variable, une valeur, qui marque les données de pneus comme non valables, lorsqu'une chute de pression, survenue après l'inscription des données de pneus et dépassant une deuxième valeur de seuil prédéfinie, a précédé la hausse de pression, qui dépasse la valeur de seuil prédéfinie.

3. Unité de surveillance de pression de pneus selon l'une quelconque des revendications précédentes, **caractérisé en ce que** la commande attribue à la variable, une valeur, qui marque les données de pneus comme non valables, lorsqu'après l'inscription des données de pneus et après la hausse de pression, dépassant la valeur de seuil prédéfinie, une autre hausse de pression est détectée, qui dépasse la valeur de seuil prédéfinie.

4. Unité de surveillance de pression de pneus selon l'une quelconque des revendications précédentes, **caractérisée en ce que** la mémoire est une mémoire électronique.

5. Procédé permettant de gérer les données de pneus dans une mémoire de données d'une unité de surveillance de pression de pneus, sachant que lors de l'inscription de données de pneus dans la mémoire de données de l'unité de surveillance de pression de pneus, une valeur est attribuée à la variable, qui indique que ces données de pneus sont valables,
**caractérisé en ce que**
la variable reste inchangée tant qu'aucun hausse de pression n'est constatée, qui dépasse la valeur de seuil prédéfinie.

6. Procédé selon la revendication 5, **caractérisé en ce que** la survenance d'une hausse de pression, dépassant la valeur de seuil prédéfinie, est notée dans la mémoire de l'unité de surveillance de pression de pneus et une valeur est attribuée à la variable, qui marque les données de pneus comme non valables, lorsque pour la deuxième fois depuis l'inscription des données de pneus, une hausse de pression est détectée, qui dépasse la valeur de seuil prédéfinie.

7. Procédé selon la revendication 5 ou 6, **caractérisé en ce qu'**après inscription des données de pneus, la survenance d'une chute de pression, dépassant une valeur seuil prédéfinie, est notée dans la mémoire de l'unité de surveillance de pression de pneus et une valeur est attribuée à la variable, qui marque les données de pneus comme non valables, lorsqu'après une telle chute de pression, une hausse de pression est détectée, qui dépasse la valeur de seuil prédéfinie.
